# DEMANDE DE BREVET EUROPEEN

(11) **EP 3 342 732 A1**
(43) Date de publication de la demande: **04.07.2018**
(21) Numéro de dépôt: 17208779.3
(22) Date de dépôt: 20.12.2017
(51) Int. Cl.: B65F 1/12

(54) **CONTENEUR AERIEN DE COLLECTE POUR CARTONS**

(30) Priorité: 28.12.2016 FR 1663462
(71) Demandeur: Compagnie Plastic Omnium, 69007 Lyon (FR)
(72) Inventeur: TROTON, Jean, 01800 MEXIMIEUX (FR)
(74) Mandataire: LLR

(57) **Abrégé**

L'invention se rapporte à un conteneur (1) aérien de collecte pour cartons, comprenant une structure interne (3), un plancher (5) dont l'ouverture permet le vidage du conteneur (1), un système de levage (7) relié à la structure métallique (3) et un habillage externe (9), le conteneur comprend des éléments verticaux (11) agencés en peigne qui permettent un rangement sur leur tranche de cartons introduits dans le conteneur (1), une partie des éléments verticaux (11) étant solidaire du plancher (5).

## Description

### DOMAINE DE L'INVENTION

La présente invention se rapporte à un conteneur aérien de collecte et, plus précisément, un tel conteneur optimisé pour stocker des cartons pour leur collecte.

### ARRIERE-PLAN DE L'INVENTION

Dans la société moderne, notamment avec la multiplication des livraisons à domicile, les cartons sont très utilisés. Toutefois, les solutions de collecte des papiers et des cartons ne sont pas à la hauteur de cette utilisation intensive, du fait que ces déchets sont, soit lourds pour le papier, soit encombrants pour les cartons. En effet, les dimensions de cartons suivent celles des produits par exemple électroniques toujours plus encombrants.

Ainsi, les sacs jaunes ne sont pas adaptés à la collecte des cartons car leur faible contenance oblige à mettre en morceaux les cartons afin de les introduire dans les sacs. C'est pourquoi, la collecte actuelle des cartons se fait en général, soit en les entreposant au sol le long des trottoirs dans les grandes villes ce qui n'est pas acceptable visuellement et qui les rend parfois difficiles à récupérer à cause des intempéries, soit en les apportant à la déchèterie ce qui peut être rendu difficile par la taille des cartons et l'éloignement de la déchèterie.

Les solutions actuelles ne sont donc pas suffisamment proches des usagers et nécessitent bien trop de manipulations pour être suivies socialement.

### RESUME DE L'INVENTION

L'invention a pour but de remédier à ces inconvénients en proposant un élément de collecte urbain ou péri-urbain permettant un entreposage optimisé des cartons et une collecte simplifiée.

À cet effet, l'invention se rapporte à un conteneur aérien de collecte pour cartons, comprenant une structure interne, un plancher dont l'ouverture permet le vidage du conteneur, un système de levage relié à la structure interne et un habillage externe, caractérisé en ce qu'il comprend des éléments verticaux agencés en peigne qui permettent un rangement sur leur tranche de cartons introduits dans le conteneur, une partie des éléments verticaux étant solidaire du plancher.

Les éléments verticaux agencés en peigne permettent avantageusement selon l'invention un rangement facilité des cartons dans le conteneur, c'est-à-dire que les usagers n'ont plus à mettre en morceaux les cartons pour les mettre dans un conteneur de leur lieu de résidence ou dans des sacs jaunes. En effet, la manipulation de l'usager se limite avantageusement à plier le carton pour le stocker sur sa tranche dans le conteneur selon l'invention, c'est-à-dire sensiblement verticalement. On comprend immédiatement que ce type de stockage limite les espaces perdus en permettant de stocker un maximum de matières cartonnées les unes contre les autres entre les éléments verticaux.

De plus, cette disposition optimisée ne rend pas le vidage du conteneur plus difficile. En effet, il suffit avantageusement selon l'invention d'ouvrir le plancher du conteneur pour dégager une partie des éléments verticaux, ce qui libère les cartons. Plus précisément, une partie des éléments verticaux étant solidaire du plancher et une autre partie des éléments verticaux étant solidaire de la structure interne permet avantageusement selon l'invention d'éviter qu'un arc-boutement de cartons empêche le vidage du conteneur. On comprend en effet que le déplacement relatif entre les parties « fixe » solidaire de la structure interne et « mobile » solidaire du plancher oblige les cartons à suivre le mouvement du plancher du conteneur en s'évacuant par gravité, par exemple, dans la trémie d'un camion de collecte.

Selon d'autres caractéristiques optionnelles de réalisation de l'invention :
- les éléments verticaux agencés en peigne sont des tubes cintrés métalliques ;
- les éléments verticaux agencés en peigne sont des parois planes ;
- la structure interne est métallique ;
- le système de levage comporte une boucle simple ou double ;
- le système de levage comporte un mécanisme de levage à commande d'ouverture de type champignon permettant l'ouverture du plancher ;
- l'habillage externe comprend un toit, des parois latérales et arrière, et, éventuellement, une paroi avant protégeant des intempéries tout ou partie de l'intérieur du conteneur ;
- un élément de rétention du contenu du conteneur qui est agencé pour maintenir ledit contenu dans le conteneur lors de son déplacement ;
- les éléments verticaux sont disposés dans une portion seulement du conteneur, pour réserver une autre portion à un autre type de stockage.

### DESCRIPTION SOMMAIRE DES DESSINS

On va maintenant présenter des modes de réalisation de l'invention donnés à titre d'exemples non limitatifs et à l'appui des figures annexées sur lesquelles :
- La figure 1 est une vue schématique en perspective d'un premier mode de réalisation d'un conteneur selon l'invention dans une position de stockage ;
- La figure 2 est une vue schématique en perspective du premier mode de réalisation d'un conteneur selon l'invention dans une position de vidage ;
- La figure 3 est une vue schématique en perspective d'un deuxième mode de réalisation d'un conteneur selon l'invention dans une position de stockage ;

- La figure 4 est une vue schématique en perspective du deuxième mode de réalisation d'un conteneur selon l'invention dans une position de vidage ;
- La figure 5 est une vue schématique en perspective d'une variante du deuxième mode de réalisation d'un conteneur selon l'invention dans une position de stockage dont une portion du conteneur est dédiée à un autre type de stockage.

### DESCRIPTION DETAILLEE DES MODES DE REALISATION PREFERES

Sur les différentes figures, les éléments identiques ou similaires portent les mêmes références. La description de leur structure et de leur fonction n'est donc pas systématiquement reprise.

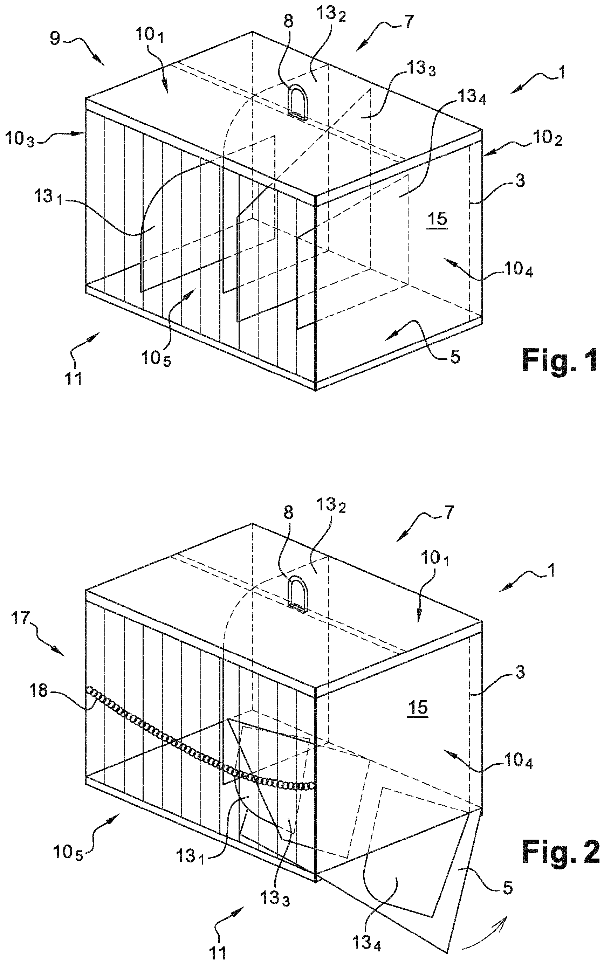

Comme illustré aux figures 1 et 2, l'invention, selon un premier mode de réalisation, se rapporte à un conteneur aérien 1 de collecte urbaine ou péri-urbaine pour cartons, c'est-à-dire un conteneur 1 destiné à être posé directement sur le sol. Le conteneur 1 comprend une structure interne 3, par exemple métallique, destinée à former l'armature du conteneur 1. La structure interne 3 sert de support à un habillage externe 9, par exemple en matériau polymère, destiné à adapter l'esthétique du conteneur 1 et à protéger des intempéries le contenu du conteneur 1. Enfin, la structure interne 3 sert également de support à un système de levage 7 destiné à soulever et déplacer le conteneur 1.

Le conteneur 1 selon l'invention comporte en outre un plancher 5 dont l'ouverture permet le vidage du conteneur 1. Comme visible à la figure 2, préférentiellement selon l'invention, le plancher 5 est monté pivotant par rapport à la structure interne 3 du conteneur 1. Ainsi, une fois le conteneur 1 soulevé au-dessus de la zone de collecte comme une trémie de camion ou une benne, le mécanisme du plancher 5 est actionné afin que le plancher 5 bascule et laisse tomber par gravité les objets présents dans le conteneur 1.

Comme illustré dans le premier mode de réalisation des figures 1 et 2, le conteneur 1 comprend également des éléments verticaux 11 agencés en peigne qui sont distribués à l'intérieur du conteneur 1. Dans l'exemple des figures 1 et 2, on peut voir que les éléments verticaux 11 comportent quatre parois 13₁, 13₂, 13₃, 13₄ sensiblement planes formant des rayonnages ou des racks permettant un rangement sur leur tranche de cartons introduits dans le conteneur 1.

En comparant les figures 1 et 2, on s'aperçoit qu'une partie des parois 13₁, 13₃, 13₄ des éléments verticaux 11 est solidaire du plancher 5, c'est-à-dire bascule avec le plancher 5, alors qu'une autre partie des parois 13₂ des éléments verticaux 11 est solidaire de la structure interne 3 et/ou de l'habillage externe 9. Bien entendu, le conteneur 1 pourrait comporter plus ou moins d'éléments verticaux 11, c'est-à-dire comporter moins de quatre éléments verticaux 11 ou plus de quatre éléments verticaux 11 suivant les configurations souhaitées. De même, chaque paroi adjacente pourrait être alternativement solidaire du plancher 5 et de la structure interne 3 et/ou de l'habillage externe 9, c'est-à-dire, dans le cas des figures 1 et 2, que les parois 13₁, 13₃ soient par exemple solidaires de la structure interne 3 et/ou de l'habillage externe 9, et les parois 13₂, 13₄ soient solidaires du plancher 5.

Préférentiellement, dans le premier mode de réalisation, les parois 13₁, 13₃, 13₄ solidaires du plancher 5 ont une hauteur inférieure à celle de la paroi 13₂ solidaire de la structure interne 3 et/ou de l'habillage externe 9. Plus précisément, les parois 13₁, 13₃, 13₄ solidaires du plancher 5 sont agencées afin de ne pas bloquer le pivotement du plancher 5, c'est-à-dire que leurs formes sont étudiées afin de ne pas rencontrer d'autres constituants du conteneur 1 qui pourraient bloquer le plancher 5 avant son ouverture maximale de sensiblement 90 degrés. C'est pourquoi, la hauteur des parois 13₁, 13₃, 13₄ est sensiblement deux fois moins grande sur tout ou partie de chaque paroi 13₁, 13₃, 13₄ par rapport à la hauteur de la paroi 13₂ qui s'étend, elle, sur sensiblement toute la hauteur du conteneur 1.

Les éléments verticaux 11 agencés en peigne permettent avantageusement selon l'invention un rangement facilité des cartons dans le conteneur 1. En effet, la manipulation de l'usager se limite avantageusement à plier le carton pour le stocker sur sa tranche sensiblement verticalement dans le conteneur 1 entre les parois 13₁, 13₂, 13₃, 13₄. On comprend immédiatement que ce type de stockage limite les espaces perdus en permettant de stocker un maximum de matières cartonnées les unes contre les autres entre les parois 13₁, 13₂, 13₃, 13₄ des éléments verticaux 11.

De plus, cette disposition optimisée ne rend pas le vidage du conteneur plus difficile. En effet, il suffit avantageusement selon l'invention d'ouvrir le plancher 5 du conteneur 1 pour libérer son contenu. Plus précisément, le déplacement relatif entre les parties « fixe » 13₂ solidaire de la structure interne 3 et/ou de l'habillage externe 9 et « mobile » 13₁, 13₃, 13₄ solidaire du plancher 5, oblige les cartons à suivre le mouvement du plancher 5 du conteneur 1. Par conséquent, on obtient une évacuation par gravité en évitant qu'un arc-boutement de cartons, entre les parois 13₁, 13₂, 13₃, 13₄ et/ou la structure interne 3 et/ou de l'habillage externe 9, empêche le vidage du conteneur 1.

Dans le premier mode de réalisation illustré aux figures 1 et 2, le système de levage 7 est monté, par exemple par soudage, sur une partie supérieure de la structure interne 3 afin de soulever et déplacer le conteneur 1 en vue de la collecte de son contenu. Dans l'exemple des figures 1 et 2, le système de levage 7 comporte une boucle 8 simple destinée à coopérer, par exemple, avec un crochet de levage d'un camion de collecte.

Il est visible aux figures 1 et 2 que l'habillage externe 9 comprend un toit 10₁, une paroi arrière 10₂ et des parois latérales 10₃, 10₄ afin de former un espace intérieur 15 du conteneur 1 ouvert, sur la face avant, pour amener des cartons dans l'espace intérieur 15.

Toutefois, l'habillage externe 9 peut également comprendre une paroi avant 10₅ protégeant totalement l'espace intérieur 15 du conteneur 1 des intempéries et qui est déplaçable pour accéder aux éléments verticaux 11 agencés en peigne. Ainsi, aux figures 1 et 2, la paroi avant 10₅ est formée par une porte souple à lanières. Par conséquent, les lanières peuvent être déplacées ou coulissées pour accéder à l'espace intérieur 15 du conteneur 1 et y stocker des cartons contre les éléments verticaux 11.

Enfin, comme visible à la figure 2, le conteneur 1 peut également comporter un élément de rétention 17 du contenu du conteneur 1 qui est agencé pour maintenir ledit contenu dans le conteneur 1 lors de son déplacement. Dans l'exemple de la figure 2, l'élément de rétention 17 comporte une chaîne 18 montée entre les parois latérales 10₃ et 10₄ entravant la face ouverte de l'espace intérieur 15 par blocage de la porte à lanières de la paroi avant 10₅.

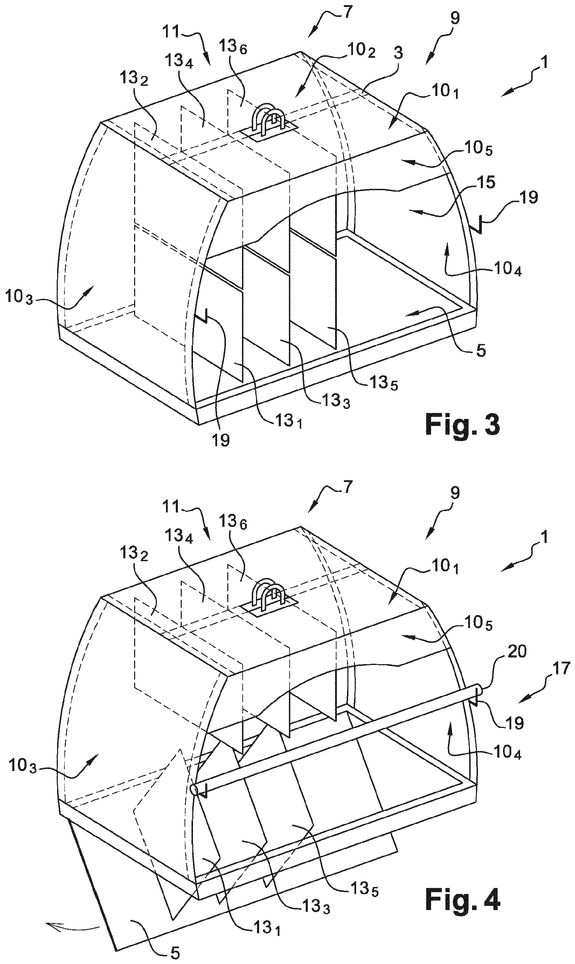

Afin de ne pas avoir à limiter la hauteur des éléments verticaux 11 comme dans le premier mode de réalisation, les figures 3 et 4 présentent un deuxième mode de réalisation de conteneur 1. Le conteneur 1 comprend une structure interne 3, par exemple métallique, destinée à former l'armature du conteneur 1. La structure interne 3 sert de support à un habillage externe 9, par exemple en matériau polymère, destiné à adapter l'esthétique du conteneur 1 et à protéger des intempéries le contenu du conteneur 1. Enfin, la structure interne 3 sert également de support à un système de levage 7 destiné à soulever et déplacer le conteneur 1.

Le conteneur 1 selon l'invention comporte en outre un plancher 5 dont l'ouverture permet le vidage du conteneur 1. Comme visible à la figure 4, préférentiellement selon l'invention, le plancher 5 est monté pivotant par rapport à la structure interne 3 du conteneur 1. Ainsi, une fois le conteneur 1 soulevée au-dessus de la zone de collecte comme une trémie de camion ou une benne, le mécanisme du plancher 5 est actionné afin que le plancher 5 bascule et laisse tomber par gravité les objets présents dans le conteneur 1.

Comme illustré dans le deuxième mode de réalisation des figures 3 et 4, le conteneur 1 comprend également des éléments verticaux 11 agencés en peigne qui sont distribués à l'intérieur du conteneur 1. Dans l'exemple des figures 3 et 4, on peut voir que les éléments verticaux 11 comportent six parois 13₁, 13₂, 13₃, 13₄, 13₅, 13₆ sensiblement planes formant des rayonnages ou des racks permettant un rangement sur leur tranche de cartons introduits dans le conteneur 1.

En comparant les figures 1 et 2, on s'aperçoit qu'une partie des parois 13₁, 13₃, 13₅ des éléments verticaux 11 est solidaire du plancher 5, c'est-à-dire bascule avec le plancher 5, alors qu'une autre partie des parois 13₂, 13₄, 13₆ des éléments verticaux 11 est solidaire de la structure interne 3 et/ou de l'habillage externe 9. Ainsi, avantageusement selon le deuxième mode de réalisation, afin de ne pas avoir à limiter la hauteur des éléments verticaux 11 comme dans le premier mode de réalisation, les six parois 13₁, 13₂, 13₃, 13₄, 13₅, 13₆ forment par paire trois cloisons sensiblement verticales dans l'espace intérieur 15 du conteneur 1. Plus précisément, lorsque le plancher 5 est fermé comme illustré à la figure 3, les parois 13₁-13₂, 13₃-13₄, 13₅-13₆ de chaque paire sont coplanaires, c'est-à-dire s'étendent dans un même plan sensiblement vertical, l'une des parois 13₁, 13₃, 13₅ étant en dessous de l'autre parois 13₂, 13₄, 13₆.

On comprend ainsi que les trois cloisons ainsi formées dans le deuxième mode de réalisation n'ont plus à être limitées en hauteur comme dans le premier mode de réalisation car seules les parois basses 13₁, 13₃, 13₅ des cloisons basculeront avec le plancher 5.

Bien entendu, le conteneur 1 pourrait comporter plus ou moins d'éléments verticaux 11, c'est-à-dire comporter moins de trois cloisons ou plus de trois cloisons suivant les configurations souhaitées. De même, les parois 13₁-13₂, 13₃-13₄, 13₅-13₆ d'une paire pourraient ne pas être de hauteur sensiblement équivalente (comme illustré dans les figures 3 et 4) ou chaque cloison adjacente pourrait être de hauteurs différentes.

Les éléments verticaux 11 agencés en peigne du deuxième mode de réalisation permettent avantageusement un rangement facilité des cartons dans le conteneur 1. En effet, la manipulation de l'usager se limite avantageusement à plier le carton pour le stocker sur sa tranche sensiblement verticalement dans le conteneur 1 entre les trois cloisons formées par les parois 13₁-13₂, 13₃-13₄ et 13₅-13₆. On comprend immédiatement que ce type de stockage limite les espaces perdus en permettant de stocker un maximum de matières cartonnées les unes contre les autres entre les cloisons des éléments verticaux 11.

De plus, cette disposition optimisée ne rend pas le vidage du conteneur plus difficile. En effet, il suffit avantageusement selon l'invention d'ouvrir le plancher 5 du conteneur 1 pour libérer son contenu. Plus précisément, le déplacement relatif entre les parties « fixe » 13₂, 13₄, 13₆ solidaire de la structure interne 3 et/ou de l'habillage externe 9 et « mobile » 13₁, 13₃, 13₅ solidaire du plancher 5, oblige les cartons à suivre le mouvement du plancher 5 du conteneur 1. Par conséquent, on obtient une évacuation par gravité en évitant qu'un arc-boutement de cartons, entre les cloisons et/ou la structure interne 3 et/ou de l'habillage externe 9, empêche le vidage du conteneur 1.

Dans le deuxième mode de réalisation illustré aux figures 3 et 4, le système de levage 7 est monté, par exemple par soudage, sur une partie supérieure de la structure interne 3 afin de soulever et déplacer le conteneur 1 en vue de la collecte de son contenu. Dans l'exemple des figures 3 et 4, le système de levage 7 comporte une boucle 8 double destinée à coopérer, par exemple, avec un crochet de levage d'un camion de collecte.

Il est visible aux figures 3 et 4 que l'habillage externe 9 comprend un toit 10₁, une paroi arrière 10₂ et des parois latérales 10₃, 10₄ afin de former un espace intérieur 15 du conteneur 1 ouvert, sur la face avant, pour amener des cartons dans l'espace intérieur 15.

Toutefois, l'habillage externe 9 peut également comprendre une paroi avant 10₅ protégeant partiellement l'espace intérieur 15 du conteneur 1 des intempéries tout en laissant l'accès aux éléments verticaux 11 agencés en peigne. Ainsi, aux figures 3 et 4, la paroi avant 10₅ est formée par une plaque fermant la partie supérieure de la face avant du conteneur 1.

Enfin, comme visible à la figure 4, le conteneur 1 peut également comporter un élément de rétention 17 du contenu du conteneur 1 qui est agencé pour maintenir ledit contenu dans le conteneur 1 lors de son déplacement. Dans l'exemple de la figure 4, l'élément de rétention 17 comporte une barre 20 attachée sur les crochets 19 des parois latérales 10₃ et 10₄ entravant la face ouverte de l'espace intérieur 15.

L'invention n'est pas limitée aux modes de réalisation présentés et d'autres modes de réalisation apparaîtront clairement à l'homme du métier. Il est notamment possible de combiner les modes de réalisation décrient précédemment. À titre d'exemple, la porte à lanières de la paroi avant 10₅ du premier mode de réalisation pourrait être appliquée au deuxième mode de réalisation au lieu de la plaque fermant la partie supérieure de la face avant du conteneur 1.

Plus généralement, l'habillage externe 9 ne saurait se limiter aux modes de réalisation cités ci-dessus. Ainsi, à titre d'exemple, l'habillage externe 9 pourrait en complément ou en variante comporter une porte coulissante ou un auvent.

Il est également possible que tout ou partie des parois 13₁, 13₂, 13₃, 13₄, 13₅, 13₆ des éléments verticaux 11 agencés en peigne puissent être remplacées par des tubes cintrés métalliques.

Le système de levage 7 pourrait également être d'un autre type. À titre d'exemple, le système de levage 7 du conteneur pourrait comporter un mécanisme de levage à commande d'ouverture de type champignon permettant l'ouverture du plancher 5 comme par exemple un mécanisme du type « Kinshofer® ».

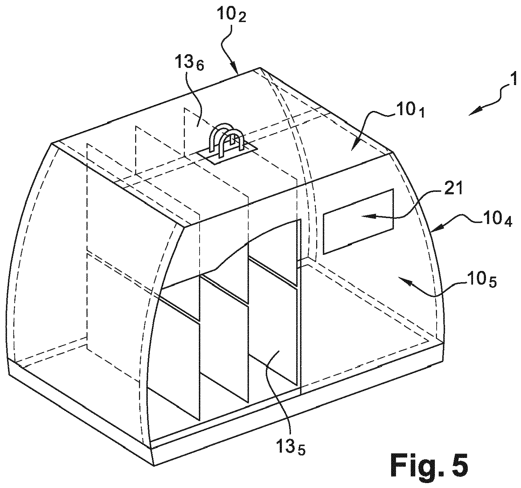

Enfin, les éléments verticaux 11 pourraient être disposés dans une portion seulement du conteneur 1 pour réserver une autre portion à un autre type de stockage. À titre d'exemple, dans une variante du deuxième mode de réalisation, le conteneur 1 pourrait conserver une partie gauche identique alors qu'une partie droite de l'espace intérieur 15 du conteneur 1 pourrait être utilisée pour stocker des papiers, des revues et/ou des magazines. Dans un exemple illustré à la figure 5, la paroi avant 10₅ de l'habillage externe pourrait totalement fermer la partie de droite du conteneur en ne laissant qu'une ouverture 21 adaptée pour que l'usager comprenne sa destination.

On comprend donc que la portion de l'espace intérieur 15 dédiée aux papiers, revues et/ou magasines serait délimitée par respectivement le toit 10₁, la paroi arrière 10₂, la paroi latérale 10₄ et la paroi avant 10₅ de l'habillage externe 9 ainsi que par la cloison formée par les parois 13₅ et 13₆ des éléments verticaux 11.

## Revendications

1. Conteneur (1) aérien de collecte pour cartons, comprenant une structure interne (3), un plancher (5) dont l'ouverture permet le vidage du conteneur (1), un système de levage (7) relié à la structure interne (3) et un habillage externe (9), **caractérisé en ce qu'**il comprend des éléments verticaux (11) agencés en peigne qui permettent un rangement sur leur tranche de cartons introduits dans le conteneur (1), une partie des éléments verticaux (11) étant solidaire du plancher (5).

2. Conteneur (1) selon la revendication précédente, dans lequel les éléments verticaux (11) agencés en peigne sont des tubes cintrés métalliques.

3. Conteneur (1) selon la revendication 1, dans lequel les éléments verticaux (11) agencés en peigne sont des parois (13₁, 13₂, 13₃, 13₄, 13₅, 13₆) planes.

4. Conteneur (1) selon l'une quelconque des revendications précédentes, dans lequel la structure interne (3) est métallique.

5. Conteneur (1) selon l'une quelconque des revendications précédentes, dans lequel le système de levage (7) comporte une boucle (8) simple ou double.

6. Conteneur (1) selon l'une quelconque des revendications 1 à 4, dans lequel le système de levage (7) comporte un mécanisme de levage à commande d'ouverture de type champignon permettant l'ouverture du plancher (5).

7. Conteneur (1) selon l'une quelconque des revendications précédentes, dans lequel l'habillage externe (9) comprend un toit (10₁).

8. Conteneur (1) selon la revendication précédente, dans lequel l'habillage externe (9) comprend des parois latérales (13₃, 13₄) et arrière (13₂).

9. Conteneur (1) selon la revendication précédente, dans lequel l'habillage externe (9) comprend une paroi avant (10₅) protégeant des intempéries tout ou partie de l'intérieur du conteneur (1).

10. Conteneur (1) selon l'une quelconque des revendications précédentes, dans lequel un élément de rétention (17) du contenu du conteneur (1) qui est agencé pour maintenir ledit contenu dans le conteneur (1) lors de son déplacement.

11. Conteneur (1) selon l'une quelconque des revendications précédentes, dans lequel les éléments verticaux (11) sont disposés dans une portion seulement du conteneur (1), pour réserver une autre portion à un autre type de stockage.
